# EUROPÄISCHE PATENTANMELDUNG

(11) **EP 0 745 899 A1**
(43) Veröffentlichungstag der Anmeldung: **04.12.1996**
(21) Anmeldenummer: 95111801.7
(22) Anmeldetag: 27.07.1995
(51) Int. Cl.: G03C 11/24, B29B 17/02

(54) **Verfahren zur Herstellung von grossformatigen, klarsichtigen Planfolien aus verbrauchten (fotografischen) Filmen durch physikalische und chemisch-biologische Oberflächenmodifikationsprozesse**

(30) Priorität: 30.07.1994 DE 4427097
(71) Anmelder: BLUE-TECH GmbH, D-91054 Erlangen (DE)
(72) Erfinder: Menhofer, Maximilian, D-91054 Erlangen (DE); Gams, Matthias, Dr., D-40231 Düsseldorf (DE); Ogilvie, Adaling, Prof. Dr., D-91054 Erlangen (DE); Vogel, Norbert, Dipl. Ing., D-91088 Bubenreuth (DE)

(57) **Zusammenfassung**

Verfahren zur Herstellung von großformatigen, klarsichtigen Planfolien aus verbrauchten (fotografischen) Filmen durch physikalische und chemischbiologische Oberflächenmodifikationsprozesse, wobei die verbrauchten Planfilme durch eine Fördereinrichtung zeitlich gesteuert nacheinander mehreren Behältern und damit verschiedenen Verfahrensschritten zugeführt werden.

## Beschreibung

Aufgabe der vorliegenden Erfindung ist ein Verfahren zur (maschinellen) Herstellung von klarsichtigen, maßhaltigen Planfolien mit Oberflächeneigenschaften, die den Einsatz in Normalpapier-Kopiergeräten sowie für Druckverfahren in Laser- und Tintenstrahldruckern erlauben, und mit Transparenzeigenschaften, die eine Verwendung in der Durchlichtprojektion ermöglichen. Weitere Aufgaben der Erfindung sind die vollständige Beseitigung von Inforamtionsdaten der verbrauchten Filmaterialien und die Erzeugung von Eigenschaften der biologisch-organischen Deckschichten der Folien, die deren mehrfache Wiederverwendbarkeit (d.h. echte Rezyklierbarkeit) ermöglichen.

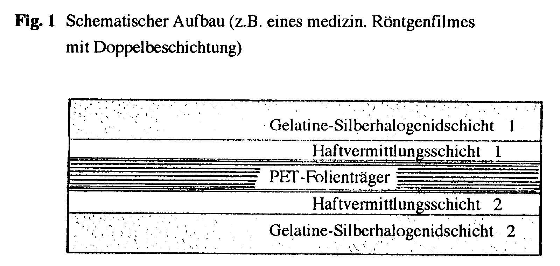

Filme in Form von Planfolien mit Polyethylenterephthalat (PET) als Trägerschicht werden seit ihrer Einführung etwa im Jahre 1968 weltweit in großen Mengen z.B. für medizinische und technische Röntgenfilme sowie Reprofilme verbraucht.
In Deutschland (alte Bundesländer) failen pro Jahr etwa 8000 Tonnen Filmmaterial als Abfall an. Dieses Filmmaterial besteht aus einer bis zu 170 µm dicken PET-Folie (Trägerschicht), einer (zwei) Gelatine-Silberhalogenidschicht(en) als lichtempfindlicher Deckschicht und aus einer (zwei) Haftvermittlungs-Zwischenschicht(en) (Polyvinylchlorid, Polyvinylidenchlorid, Polyacrylnitril, u.a., z.B. mit Itaconsäure vernetztes Polymerisat). (s. Fig. 1)

Die bisherigen Entsorgungsverfahren verbrauchter Kunststoffolien basieren entweder auf einer Deponierung der Abfallstoffe, auf thermischen Entsorgungsverfahren in Verbrennungsanlagen, oder auf einer Regranulierung der Kunststoffe. In jedem Fall entstehen bei diesen Verfahren neben der vollständigen Zerstörung der Kunststoffprodukte technische Nebenkosten. Darüber hinaus entstehen auch Kosten für die Beseitigung bzw. Vermeidung von Umweltschäden.

Zur Zeit werden praktisch nur thermische Entsorgungsverfahren angewandt. Hierbei wird das PET-Filmmaterial einschließlich der Zwischenschicht und der silberhaltigen Gelatinedeckschicht verbrannt und ein Teil des Schwermetalls Silber aus der Asche zurückgewonnen. Verbrennung bei hohen Temperaturen, die das Entstehen bestimmter Umweltgifte vermindern, ist ungünstig für das Ausmaß der Silberrückgewinnung. Die Asche muß ebenso wie die Filterrückstände als Sondermüll entsorgt werden. Gasförmige Schadstoffemissionen lassen sich nicht vollständig vermeiden.

Die bekannten Verfahren zur Herstellung hitzebeständiger und maßhaltiger Kopier- und Druckfolien, die für die Durchlichtprojektion geeignet sind, basieren ausschließlich auf dem Einsatz von Primärkunststoffen oder auf Zumischung von Sekundärkunststoffen in Form von Regranulaten. Ein Verfahren zur Herstellung von kopier- und druckfähigen Klarsichtfolien für die Durchlichtprojektion durch geeignete Behandlung und Modifikation der Oberflächenschichten von verbrauchten Filmfolien ist bisher nicht bekannt.

Bisher bekannte Verfahren (vgl. hierzu die Offenlegungsschrift Nr. 2356393, angemeldet am Dt. Patentamt am 12. 11. 73), die aus verbrauchtem Filmmaterial eine Gewinnung der bei heutigen Filmen benutzten Komponenten (Trägerfolie, Haftvermittlungsschichten, Gelatineschichten, Schwermetall Silber) durch hydrolytische und proteolytische Prozesse beinhalten, oder bei denen die Haftvermittlungsschicht durch flüchtige Kohlenwasserstoffe abgetrennt wird, erfordern gemäß den beschriebenen Verfahren in jedem Fall eine Zerstörung (Zerkleinerung) der planen PET-Folie (Trägerschicht). Gewonnen werden könnten gemäß vorbeschriebener Verfahren nur die Foliengrundstoffe, die dann nur zu minderwertigeren Regranulaten aufgearbeitet werden könnten.

Ein weiteres Verfahren (Europäische Patentschrift Nr. 0086841, angemeldet am 20. 8. 82), das eine Gewinnung der planen Trägerschicht zu ermöglichen scheint, arbeitet mit Flüssigkeiten, die mit gentechnisch veränderten Mikroorganismen (Bakterien, Pilze) zum Abbau der Gelatineschicht versetzt sind, sowie mit Ultraschallwellen im Wasserbad zur Entfernung der angelösten Schichten. Dieses Verfahren unterläge wegen des Einsatzes bakterieller Mutanten den strengen Sicherheitsbestimmungen des "Gentechnikgesetzes", die abgeschlossene Laboratorien und andere Vorsichtsmaßnahmen voraussetzen. Außerdem wurde das Verfahren nur für Fotopapier entwickelt und entsprechend patentiert.

Keines der bisherigen Verfahren diente der Aufgabe, funktionsfähige Planfilme zurückzugewinnen. Trotz langjähriger fotochemischer und proteinchemischer Kenntnisse hatten die Entsorgungsverfahren lediglich die Rückgewinnung des Silbers als Aufgabe. Es ist bisher übersehen worden, daß allein der Materialwert des PET-Kunststoffes den des Silbers deutlich übertrifft. Der Wert der klarsichtigen Folie liegt noch wesentlich höher.

Die Aufgabe der vorliegenden Erfindung besteht in der Umweltverträglichkeit des angewandten Verfahrens, das ein Entstehen von Umweltbeeinträchtigungen in Form von Emissionen, Lärm, Giftstoffen oder deponiepflichtigen Abfallstoffen ausschließt bzw. minimiert. Eine thermische Entsogung ist nicht erforderlich. Ein besonderer Vorteil des neuen Verfahrens besteht in der Anwendung der kostengünstigeren Biotechnologie, d.h. zellfreier Enzyme ohne Einsatz mikrobieller Mutanten (wie z.B. im japanischen Verfahren).
Eine weitere Aufgabe des neuen Verfahrens ist die Elimination des bisherigen Informationsgehaltes der verbrauchten Planfilme. Aus datenschutzrechtlichen Gründen ist diese Aufgabe insbesondere bei gelagerten Röntgenfilmen aus dem medizinischen Bereich wichtig.

Die Lösung der Aufgabe besteht in einem Verfahren zur Oberflächenmodifikation des verbrauchten Filmmaterials durch Veränderung der lichtabsorbierenden und lichtstreuenden Komponenten der Oberflächenschichten bis zur vollständigen Transparenz oder, alternativ, durch Ablösen der die Information tragenden Schichten.

Die Lösung der vorangestellten Aufgaben ist im Hauptanspruch und in den Unteransprüchen der Erfindung beschrieben. Wie daraus hervorgeht, besteht die Erfindung aus mehreren Verfahrensstufen und verschiedenen, den Eigenschatften des verbrauchten Filmmaterials und den gewünschten Produkten angepaßten, Modifizierungen dieser Stufen.

Die nach dem erfindungsgemäßen Verfahren gewonnene intakte, kratzerarme und klarsichtige (häufig leicht blau eingefärbte) Planfolie eignet sich wegen ihrer Hitze- und Formbeständigkeit als kopierfähige Folie in Laserdruckern und Fotokopierern. Der Markt für hitzestabile transparente und maßhaltige Folien ist sehr groß. Nach dem Einsatz z.B. in der Overheadprojektion können diese Folien wegen ihrer hohen Maßhaltigkeit beispielsweise als Distanzfolien eingesetzt werden.

Aufgrund des erfindungsgemäßen Verfahrens ist auch eine mehrfache Verwendung der Folien nach wiederholter Modifikation der Oberflächenschichten gegeben.

### Beispiel 1

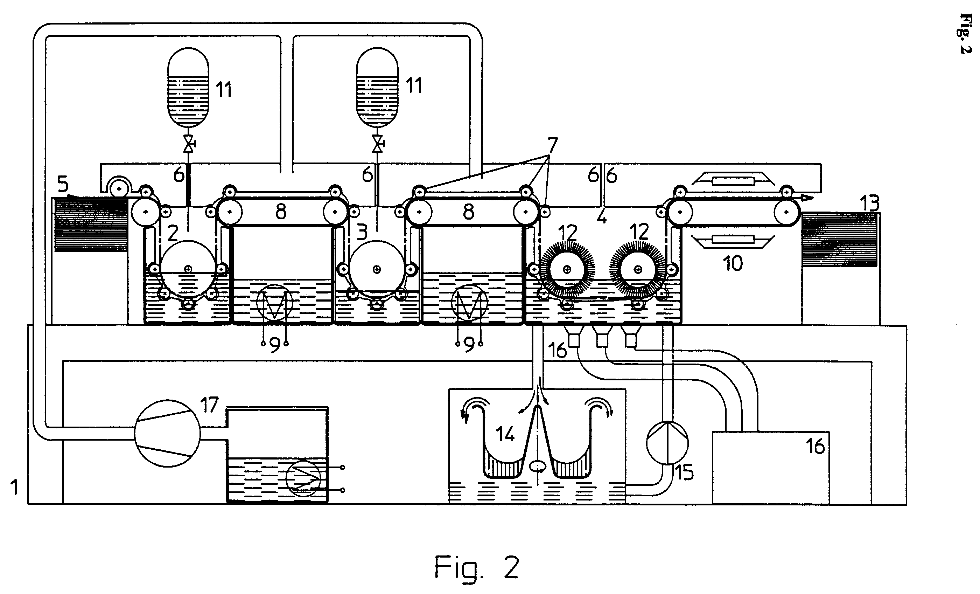

In einer ersten (maschinellen) Ausführung des erfindungsgemäßen Verfahrens werden verbrauchte Planfilme durch eine Fördereinrichtung zeitlich gesteuert nacheinander mehreren Behältern (gefüllt mit Bädern oder Dämpfen) zugeführt und von diesen wieder abgeführt, von denen beispielsweise (s. Fig 2)
- ein erster Denaturierungsmittel, d.h. chem. Substanzen (s. Tabelle 1), die Proteine (Gelatine) in ihrer räumlichen Struktur verändern,
- ein zweiter zellfreie Enzyme (s. Tabelle 2) enthält,
wobei den wäßrigen Bädern Puffersubstanzen (s. Tabelle 3) zur Einhaltung vorgegebener pH-Werte zugeführt werden und ferner mechanische Reinigungsvorrichtungen zum Abtragen angelöster Gelatine vorgesehen sind.

Mit einer solchen Pilotanlage wurden bereits zahlreiche Planfolien hergestellt, die sich z.B. in der Overhead-Projektion und in Fotokopiergeraten gut bewährt haben.

Zur näheren Erläuterung des erfindungsgemäßen Verfahrens wird auf die Zeichnung (Fig. 2) verwiesen. Sie zeigt schematisch eine Anlage zur Durchführung des Verfahrens.
Auf dem Anlagegerüst 1 sind die Behälter 2 bis 4 mit wäßrigen Bädern gefüllt. Die Vorrichtung 5 dient der Aufnahme von Filmfolien und ihrer Einzelzuführung an die Fördereinrichtung 6. Die Fördereinrichtung 6 besteht aus Transportrollen 7 und Förderbändern 8 und führt die vereinzelten Folien nacheinander den Behältern 2 bis 4 zu. Die Zuführung erfolgt dabei mit einer Geschwindigkeit und Verweildauer in den Bädern 2 bis 4, daß ihre Wirkung für den Ablösevorgang der Gelatine-Silberschicht voll zur Wirkung kommt. Die Deckschicht der Transportrollen 7 und der Förderbänder 8 ist dabei so gewählt, daß eine Verletzung der Haftschicht und der PET-Trägerschicht weitgehend vermieden wird. Hierzu eignet sich z.B. Schaumstoff. Insbesondere im wäßrigen Bad 4 können dabei die Rollen so gestaltet werden, daß ein Abquetschen der angelösten Gelatine-Silberschicht stattfindet. Der Behälter 2 enthält ein wäßriges Bad mit Denaturierungsmittel. Hierdurch wird die durch den fotographischen Entwicklungsprozeß (und evtl. durch bestimmte Lagerbedingungen) vernetzte und gehärtete Gelatine-Silberschicht bereits großflächig abgelöst.
Im zweiten wäßrigen Bad (Behälter 3) befindet sich eine mit zellfreien Enzymen angereicherte Lösung zur partiellen Spaltung von Peptidbindungen im dreidimensionalen Netz des Gelatine-Gels. ("Structural and Dynymical Properties of Gelatin Solutions and Gels" in "Protein Interactions"; H. Visser, Ed.; p.313-326; Vlg. Chemie Weinheim 1992).

Zur Optimierung des Prozesses sind die Bäder 2 und 3 mit einer elektrischen Heizung 9 versehen, die die Temperaturen auf für die Ablösung der Gelatine-Silberschicht optimale Werte bringen. Ferner sind Sensoren (nicht dargestellt) vorgesehen, zur Feststellung des pH-Wertes der Bäder 2 und 3. In Abhängigkeit der von den Sensoren erfaßten pH-Werte werden über die Zuläufe 11 den Bädern Korrekturlösungen (verdünnte Säure oder Lauge) zugeleitet zur Einhaltung der optimalen pH-Werte. Im wäßrigen Bad 4 sind Bürsten 12 angeordnet, an denen die Filmfolien so verbeigeführt werden, daß die angelöste Gelatine-Silberschicht abgetragen wird. Dieser Vorgang wird unterstützt durch die am Behälter 4 angebrachten Ultraschallgeneratoren 16. Anstelle der Bürsten 12 kann auch eine Druckwasserreinigung verwendet werden.
Die gereinigten Planfolien werden, nachdem sie durch die Heizvorrichtung 10 getrocknet wurden, schließlich an die Stapeleinrichtung 13 weitergeleitet und dort zwischengelagert.

Der Behälter 4 ist über eine Rohrleitung ferner mit einer Zentrifuge 14 verbunden, die das in dem Gelatine-Silberschlamm enthaltene Silber von der Gelatine durch beschleunigte Sedimentation vortrennnt. Dieses Silbersediment kann anschließend gesondert zur Weiterverarbeitung entnommen werden. Mit der Zentrifuge 14 ist ferner eine Pumpe 15 verbunden, die das in der Zentrifuge 14 enthaltene Wasser nach Zwischenschaltung von Filtern und Sieben wieder in den Behälter 4 zurückpumpt.

Die Gelatinebruchstücke werden als Konzentrat für die Weiterverwendung in der pharmazeutischen Industrie (Salbengrundlagen, Nährboden) gesammelt.

Zur Ermöglichung eines oberflächenschonenden Ablösevorganges werden verteilt über die gesamte Anlage Dampfdüsen eingestzt, die dem gesamten Prozeß Wasserdampf unterschiedlicher Temperatur (zw. 60 und 90^{o} C) zuführen.

Mit dem beschriebenen Verfahren werden einwandfreie, kratzerarme und klarsichtige Planfolien gewonnen, die sich vielfältig für eine Weiterverwendung eignen (s. Anlage).

Verschiedene Denaturierungsmittel (Tab. 1) wurden sowohl in Einzelwannen als auch in der Anlage (wie unter Beispiele 1 beschrieben) auf ihre Eigenschaft bzw. Fahigkeit hin untersucht, die Gelatine-Deckschichten so weit zu verändern (durch Quellung, Wassereinlagerung und partieller Strukturänderung), daß die folgenden mechanischen oder anderen Verfahrensschritte, wie enzymatische Andauung, erleichtert bzw. beschleunigt werden.

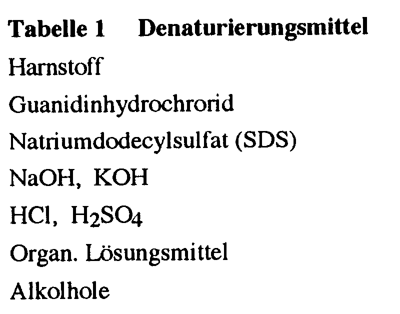

Von den klassischen Proteindenaturierungsmitteln haben sich nach unseren Testungen im Wannenverfahren insbes. Harnstoff ( 4 M, 6 M) auch in der Versuchsanlage (s. obere Beschreibung) bewährt, bei Temperaturen zwischen 50 und 60 ^{o}C.
Guanidinhydrochlorid wurde bei einer Konzentration von 6 M getestet, bei Temperaturen zwischen 37 und 60 ^{o}C. Insbesondere bei Kodak-Röntgenfilmen war eine Vorbehandlung mit diesen Denaturierungsmitteln sehr erfolgreich, wenn anschließend Proteasen eingesetzt worden sind. Das Problem des "Verschleppens" von Denaturierungsmittel in das Bad mit zellfreien Enzymen konnte durch entsprechende Zwischenspülungen gelöst werden.
Die schwache Zumischung von Natronlauge (1 %) in die wäßrige Lösung mit Denaturierungsmitteln beschleunigte den Ablösungsvorgang deutlich.
Alkalilaugen und Mineralsäuren führen insbes. in konzentrierteren Lösungen auch zu einer Denaturierung von Protein (Gelatine), erfordern jedoch eine effektives Auswaschen bzw. Neutralisation und Pufferung, wenn sie vor einer Behandlung mit Enzymen (Proteasen) zum Einsatz kommen.
Auch organische Lösungsmittel unterschiedlicher Struktur und Alkohole führen zu Proteindenaturierungen, da durch Wechselwirkungen die native Konformation gestört werden kann.
Prinzipiell ist jedes Denaturierungsmittel geeignet zur Vorbehandlung der Gelatineschichten.
Neben der Denaturierung bewirken einige der Mittel auch eine Veränderung des Quellzustandes der Gelatineschicht, in manchen Fällen (z.B. Alkalilauge) auch hydrolytische Spaltungen des Gelatine-Netzwerkes.

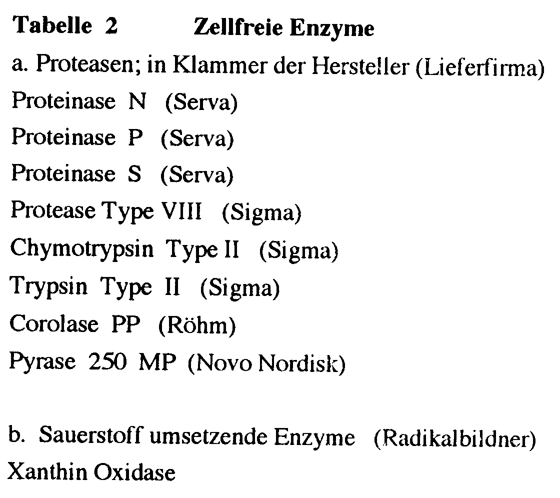

Alle aufgeführten Proteasen wurden in Konzentrationen von 1-6 mg/ml (ungepufferte wäßrige Lösung) bei den Temperaturen 25, 37 und 50 ^{o}C getestet.
Alle Proteasen führen, wenn auch unterschiedlich schnell, zu einer partiellen Hydrolyse der Gelatineketten und damit zu einer beginnenden Auflösung des Gelatine-Netzes. (Chymotrypsin und Proteinase P waren relativ schwach wirksam, so daß diese für den praktischen Einsatz im gerätetechnischen Verfahren untauglich sind). Nach 15-300 sec konnten die Gelatineschichten entweder mit einer Wasserspritze unter niedrigem Druck oder, alternativ, durch kurze (5-10 sec) Behandlung in einem Ultraschallbad vollständig entfernt werden.
Röntgenfilme bestimmter Hersteller benötigten in der Regel kürzere Inkubationszeiten als Röntgenfilme als Röntgenfilme anderer Hersteller.
In leicht alkalischem Milieu (Puffermilieu eingestellt auf pH 8-9) arbeiten einige Proteinasen deutlich schneller , so z.B. Pyrase.

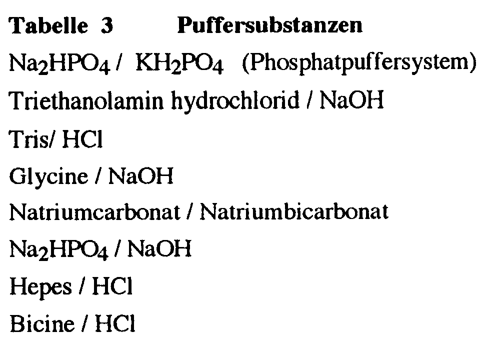

Sehr viele Puffersystem scheinen für das erfindungsgemäße Verfahren gut geeignet. Mehrere Proteasen konnten in ihrer Aktivität und vor allem in ihrer Lebensdauer durch sorgfältige (d.h. laufend kontrollierte und nachregulierte) Pufferung verbessert werden.

### Beispiel 2

In einer zweiten (maschinellen) Ausführung des erfindungsgemäßen Verfahrens werden verbrauchte Planfilme durch eine Fördereinrichtung zeitlich gesteuert nacheinander mehreren Behältern (gefüllt mit Bädern oder Dämpfen) zugeführt und von diesen wieder abgeführt, von denen beispielsweise (s. Abbildung 2)
- ein erster eine Hochdruckflüssigkeitsbestrahlungseinrichtung besitzt, in dem bei Raumtemperatur bei einem Druckgradienten von wenigstens 450 bar die lichtabsorbierenden und lichtstreuenden Komponenten der Oberflächenschichten entfernt werden,
- ein zweiter eine Sprühvorrichtung besitzt, die geeignet ist, die Oberflächen der noch mit einer Haftvermittlungsschicht versehenen Folien mit einer Flüssigkeit, die biologisch-organische Komponenten enthält, zu benetzen,
wobei den wäßrigen Bädern Puffersubstanzen (s. Tabelle 3) zur Einhaltung vorgegebener pH-Werte zugeführt werden und ferner mechanische Reinigungsvorrichtungen zum Abtragen angelöster Gelatine vorgesehen sind.

### Beispiel 3

Für die Herstellung der PET-Folie ohne Gelatineschichten und ohne Haftvermittlungsschichten, kann man als einen ersten Verfahrensschritt organische Lösungsmittel (Tabelle 4) unterschiedlicher Struktur (polar aprotisch, cyclisch aprotisch, unpolar) einsetzen, bzw. Mischungen von diesen. Verfahrenstechnisch schwierig, aber lösbar ist die genaue zeitliche Steuerung, um ein evtl. unerwünschtes Anlösen der PET-Folie zu vermeiden. Die in der Patentschrift Nr. 2356393 (Horizons Research Inc., USA) aufgeführten Effekte der Lösungsmittel konnten wir im wesentlichen bestätigen.

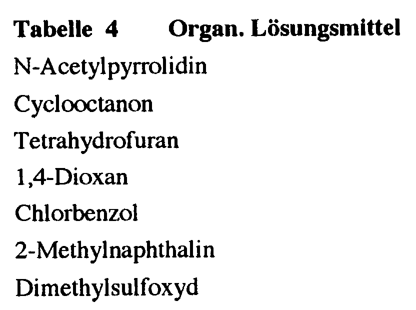

Der Umgang und Einsatz von organ. Lösugnsmittel erfordert besondere Sicherheitsvorkehrungen und gerätetechnisch inerte Baubestandteile.

### Beispiel 4 (a. Laugen, b. alkoholische Laugen)

a. Systematisch getestet wurden die Alkalilaugen KOH und NaOH in Konzentrationen von 0,1-2M bei den Temperaturen 60 bis 90 ^{o}C.
   Eine Nachbehandlung der Folien zum Zwecke der vollständigen, d.h. fleckenfreien Ablösung der Gelatineschichten erfolgte mit Wasserstrahl bei niedrigem Druck oder im Ultraschallbad.
   NaOH wirkte ab 0,5 M bei 60 ^{o}C noch relativ schwach; lange Inkubationszeiten von bis zu 10(20) min waren erforderlich. Bei 80 ^{o}C war dagegen die Ablösegeschwindigkeit erheblich beschleunigt.
   Mit 1 M Natronlauge ließen sich z.B. Agfa-Röntgenfilme sehr schnell "klären"; Kodakfilme benötigten längere Inkubationszeiten.
   KOH war unter allen Bedingungen (Konzentrationen, Temperaturen) wesentlich weniger wirksam als NaOH.
b. KOH und NaOH (0,5-1 M) wurden in alkoholischen Lösungen (Äthanol, Methanol, Glycerin) bei Temperaturen von 25 - 70 ^{o}C auf Ablöseeigenschaften getestet, wie unter a. beschrieben.
   Die Wirkungen waren gegenüber wäßrigen Laugenlösungen (s. unter a.) nicht verbessert. Die Verwendung alkoholischer Laugen ist für manche Verfahren (bzw. in Kombination mit anderen Verfahrensstufen) von Vorteil, wenn längere Prozeßzeiten notwendig sind. Insbesondere Glycerin verhindert ein schnelles Austrocknen der hydratisierten Gelschichten; die Laugenwirkung ist allerdings in Glycerin deutlich schwächer als in Äthanol.
   In allen alkoholischen Lösungen war NaOH deutlich wirksamer als KOH.

### Beispiel 5 (Sauerstoff, Sauerstoffradikale; H₂O₂)

Sauerstoff *in statu nascendi* (wenn er in chemischen Reaktionen neu entsteht) und Sauerstoff-Radikale können Proteine angreifen. Insbesondere ist Collagen (Monboisse, J.C. & Borel, J.P. 1992; Oxidative Damage to Collagen in "Free Radicals and Aging"; I. Emerit & B. Chance, Eds; Birkhäuser Vlg. Basel) und somit auch Gelatine empfindlich gegenüber intensiver Sauerstoffbegasung, wobei immer ein gewisser Anteil reaktionsfreudiger Radikale vorhanden ist.
Intensive Begasung mit gasförmigem Sauerstoff im wäßrigen Bad 2 (der maschinellen Anordnung aus Beispiel 1) erleichtert bzw. beschleunigt die enzymatische Anlösung der Gelatine in Bad 3. Sauerstoff *in statu nascendi*, wie er z.B. aus hypochloriger Säure spontan entsteht, ist besonders wirksam.
Sauerstoffradikale können auch enzymatisch in einem wäßrigem Bad erzeugt werden, wie z.B. das Superoxidanion-Radikal (O₂⁻) durch Xanthin-Oxidase.
Das Hydroxylradikal (OH·), das in Gegenwart von Sauerstoff durch Radiolyse unter Gammabestrahlung in wäßrigem Puffermilieu erzeugt werden kann, führt zu Aufspaltungen in Polypeptidketten. (Schüßler, H. & Schilling, K. 1984 Int. J. Radiat. Biol. 45: 276-281. "Oxygen effect in the radiolysis of proteins")
Inkubation von verbrauchten Röntgenfilmen in verdünnter lösung von Wasserstoffperoxid (H₂O₂) führte bereits nach 10 sec zu sichtbarer Blasenbildung, nach wenigen Minuten zu einer Art von Verflüssigung der Gelatineschichten, die unter Wasserstrahl dann sehr leicht ablösbar waren. Zumischung von verdünnter NaOH führte bereits nach 15-30 sec zu diesem Verflüssigungsphänomen.

### Beispiel 6

Wäßrig benetzte Röntgenfilme wurden für 0,1 - 2 min in einem Mikrowellengerät behandelt. Es kam zu einer deutlich sichtbaren Aufquellung (Hydratisierung) der Gelatineschichten, was z.B. nachfolgende Verfahrensschritte wie enzymat. Behandlung deutlich beschleunigte.
Verfahrenstechnisch läßt sich eine Mikrowellenvorrichtung zwischen die Bäder 2 und 3 oder aber in Kombination mit Bad 2 verwirklichen.

### Beispiel 7 (Überführung des metall. Silbers in Ag⁺; Redox-Systeme; Komplexbildner; Bleichverfahren)

Für die Überführung des metallischen Silbers in Silberionen eignen sich die bekannten fotografischen "Abschwächer" bzw. Bleichmittel wie z.B. Kaliumhexacyanoferrat (III) und Natriumthiosulfat. Während des Redox-Prozesses wird das dreiwertige Eisen des roten Blutlaugensalzes zu zweiwertigem Eisen reduziert, während Silber zu Silberkationen (Ag⁺) oxidiert wird.

[Fe³⁺(CN)₆]³⁻ + Ag --> [Fe²⁺(CN)₆]⁴⁻ + Ag⁺

[Fe²⁺(CN)₆]⁴⁻ + 4 Ag⁺ -->^{Ag}₄ [Fe²⁺(CN)₆]

Das Silberhexacyanoferrat(II) ist wie Silberbromid in Fixierbädern (Natriumthiosulfat) durch Komplexbildung löslich und kann so aus der Schicht gespült werden.
Außer Hexacyanoferrat(III) können nach demselben Redox-Verfahren auch Peroxidisulfat (S₂O₈²⁻ ),Dichromat (Cr₂O₇²⁻) oder Permanganat (MnO₄²⁻) als Oxidationsmittel eingesetzt werden.

### Beispiel 8 (Härtungsverfahren; Aldehyde; bifunktionelle Agentien, sogen. Cross-linker)

Härtebäder der fotografischen Technologie enthalten Aldehyde (z.B. Formaldehyd oder Glutaraldehyd), die leicht anwendbar sind und gute Ergebnisse der Härtung erzeugen.

Insbesondere Formaldehyd jedoch sollte wegen seiner Toxizität nicht mehr in größerem Maßstab angewandt werden.
Bifunktionelle Agentien ("Crosslinker"), die wesentlich weniger flüchtig und toxisch sind, eignen sich dagegen auch für die zusätzliche Vernetzung (und damit Härtung) des Gelatine-Netzgerüstes.
Getestet wurden N,N'-methylen-bis-acrylamid und N,N'-diallyltartardiamid. Die im Gel ablaufenden Reaktionen wurden gestartet mit den Katalysatoren Ammoniupersulfat oder N,N,N',N'-tetramethylethylendiamin (TEMED).

### Bezugszeichenliste zu Fig. 2

- 1: Anlagegerüst
- 2: Behälter für wäßriges Bad
- 3: Behälter für wäßriges Bad
- 4: Behälter für wäßriges Bad
- 5: Stapel für Vereinzelvorrichtung
- 6: Fördereinrichtung
- 7: Transportrollen
- 8: Förderbänder
- 9: Heizung (Badheizung)
- 10: Heizungsvorrichtung (Luft)
- 11: Vorratsbehälter für Pufferlösungen
- 12: Bürsten
- 13: Stapeleinrichtung
- 14: Zentrifuge
- 15: Pumpe
- 16: Ultraschallgeneratoren
- 17: Dampferzeuger

## Patentansprüche

1. Verfahren zur Herstellung großformatiger, transparenter und maßhaltiger Planfolien aus verbrauchten (fotografischen) Filmen mit Hilfe von bekannten Ablöseprozessen, Abtragverfahren und Oberflächenmodifikationsverfahren, **dadurch gekennzeichnet,**
daß zur Gewinnung von klarsichtigen Folien die Filme als Ganzes unzerstört über Transportvorrichtungen, die ihrerseits derart ausgerichtet sind, daß sie die Oberfläche der Planfolien nicht beschädigen, Ablöseverfahren, Abtragvor richtungen und Oberflächenmodifikationsverfahren zugeführt werden.

2. Verfahren nach Anspruch 1, dadurch gekennzeichnet, daß für Transportvorrichtungen Zahnräder verwendet werden.

3. Verfahren nach Anspruch 1, dadurch gekennzeichnet, daß für Transportvorrichtungen Bänder verwendet werden.

4. Verfahren nach Anspruch 1, dadurch gekennzeichnet, daß für Transportvorrichtungen Walzen verwendet werden.

5. Verfahren nach Anspruch 1, dadurch gekennzeichnet, daß für Transportvorrichtungen Luftdüsen verwendet werden.

6. Verfahren nach Anspruch 1, dadurch gekennzeichnet, daß für Transportvorrichtungen Ansaugsysteme verwendet werden.

7. Verfahren nach Anspruch 1, dadurch gekennzeichnet, daß für Transportvorrichtungen elektrostatische Methoden verwendet werden.

8. Verfahren nach Anspruch 1, dadurch gekennzeichnet, daß für Transportvorrichtungen laminar strömende Flüssigkeiten verwendet werden.

9. Verfahren nach Anspruch 1, dadurch gekennzeichnet, daß, zur Gewinnung des ursprünglichen Kunststoffträgers mit Haftvermittlungsschichten, eine oder beide Gelatineschichten durch Hochdruckflüssigkeitsbestrahlung als Abtragverfahren entfernt werden.

10. Verfahren nach Anspruch 1, dadurch gekennzeichnet, daß zur Gewinnung des ursprünglichen Kunststoffträgers mit Haftvermittlungsschichten eine oder beide Gelatineschichten durch Behandlung mit heißem Wasserdampf als Abtragverfahren entfernt werden.

11. Verfahren nach Anspruch 1, dadurch gekennzeichnet, daß zur Gewinnung des ursprünglichen Kunststoffträgers mit Haftvermittlungsschichten eine oder beide Gelatineschichten durch Behandlung mit verdünnter Säure als Abtragverfahren entfernt werden.

12. Verfahren nach Anspruch 1, dadurch gekennzeichnet, daß zur Gewinnung des ursprünglichen Kunststoffträgers mit Haftvermittlungsschichten eine oder beide Gelatineschichten durch Behandlung mit verdünnter Lauge als Abtragverfahren entfernt werden.

13. Verfahren nach Anspruch 1, dadurch gekennzeichnet, daß zur Gewinnung des ursprünglichen Kunststoffträgers mit Haftvermittlungsschichten eine oder beide Gelatineschichten durch Behandlung mit zellfreien Enzymen als Abtragverfahren entfernt werden.

14. Verfahren nach Anspruch 1, dadurch gekennzeichnet, daß zur Gewinnung des ursprünglichen Kunststoffträgers mit Haftvermittlungsschichten eine oder beide Gelatineschichten mit mechanischen Abriebmethoden als Abtragverfahren entfernt werden.

15. Verfahren nach Anspruch 1, dadurch gekennzeichnet, daß zur Gewinnung des ursprünglichen Kunststoffträgers mit Haftvermittlungsschichten eine oder beide Gelatineschichten durch Teilchenstrahlmethoden als Abtragverfahren entfernt werden.

16. Verfahren nach Anspruch 1, dadurch gekennzeichnet, daß zur Gewinnung des ursprünglichen Kunststoffträgers mit Haftvermittlungsschichten eine oder beide Gelatineschichten durch Behandlung mit Ultraschall als Abtragverfahren entfernt werden.

17. Verfahren nach Anspruch 1-16, dadurch gekennzeichnet, daß für spezielle Oberflächenanforderungen - wie bessere elektrostatische Haftung, oder zur Verminderung der elektrostatischen Haftung, erhöhte Kratzerresistenz und häufigere Wiederverwendbarkeit - zusätzliche anorganische Schichten aufgebracht werden.

18. Verfahren nach Anspruch 1-17, dadurch gekennzeichnet, daß für spezielle Oberflächenanforderungen - wie bessere elektrostatische Haftung, oder zur Verminderung der elektrostatischen Haftung, erhöhte Kratzerresistenz und häufigere Wiederverwendbarkeit - zusätzliche organische Schichten aufgebracht werden.

19. Verfahren nach Anspruch 1, dadurch gekennzeichnet, daß zur Gewinnung des ursprünglichen Kunststoffträgers mit einer oder beiden Haftvermittlungsschichten und zusätzlich mit einer oder beiden Gelatineschichten alkoholische Laugen als Abtragverfahren eingesetzt werden.

20. Verfahren nach Anspruch 1, dadurch gekennzeichnet, daß zur Gewinnung des ursprünglichen Kunststoffträgers mit einer oder beiden Haftvermittlungsschichten und zusätzlich mit einer oder beiden Gelatineschichten Alkohole als Abtragverfahren eingesezt werden.

21. Verfahren nach Anspruch 1, dadurch gekennzeichnet, daß zur Gewinnung des ursprünglichen Kunststoffträgers mit einer oder beiden Haftvermittlungsschichten und zusätzlich mit einer oder beiden Gelatineschichten organische und/oder aprotische Lösungsmittel als Abtragverfahren eingesetzt werden.

22. Verfahren nach Anspruch 1, dadurch gekennzeichnet, daß zur Gewinnung des ursprünglichen Kunststoffträgers mit einer oder beiden Haftvermittlungsschichten und zusätzlich mit einer oder beiden Gelatineschichten mechanische Methoden als Abtragverfahren eingesetzt werden.

23. Verfahren nach Anspruch 1, dadurch gekennzeichnet, daß zur Gewinnung des ursprünglichen Kunststoffträgers mit einer oder beiden Haftvermittlungsschichten und zusätzlich mit einer oder beiden Gelatineschichten Teilchenstrahler als Abtragverfahren eingesetzt werden.

24. Verfahren nach Anspruch 19-23, dadurch gekennzeichnet, daß für spezielle Oberflächenanforderungen - wie bessere elektrostatische Haftung, oder zur Verminderung der elektrostatischen Haftung, erhöhte Kratzerresistenz und häufigere Wiederverwendbarkeit -
zusätzliche anorganische Schichten aufgebracht werden.

25. Verfahren nach Anspruch 19-24, dadurch gekennzeichnet, daß für spezielle Oberflächenanforderungen - wie bessere elektrostatische Haftung, oder zur Verminderung der elektrostatischen Haftung, erhöhte Kratzerresistenz und häufigere Wiederverwendbarkeit -
zusätzliche organische Schichten aufgebracht werden.

26. Verfahren nach Anspruch 1, dadurch gekennzeichnet, daß zur Gewinnung des Kunststoffträgers mit einer oder beiden Gelatineschichten und mit einer oder beiden Haftvermittlungsschichten, sowie zur Erzielung fleckenfreier Transparenz, die lichtabsorbierenden und lichtstreuenden metallischen Silberkörner durch Überführung in ionisiertes Silber entfernt werden.

27. Verfahren nach Anspruch 1, dadurch gekennzeichnet, daß zur Gewinnung des Kunststoffträgers mit einer oder beiden Gelatineschichten und mit einer oder beiden Haftvermittlungsschichten, sowie zur Erzielung fleckenfreier Transparenz, die lichtabsorbierenden und lichtstreuenden metallischen Silberkörner durch Behandlung mit chemischen Redox-Systemen entfernt werden.

28. Verfahren nach Anspruch 1, dadurch gekennzeichnet, daß zur Gewinnung des Kunststoffträgers mit einer oder beiden Gelatineschichten und mit einer oder beiden Haftvermittlungsschichten, sowie zur Erzielung fleckenfreier Transparenz, die lichtabsorbierenden und lichtstreuenden metallischen Silberkörner durch Behandlung mit chemischen Redox-Systemen und Komplexbildnern entfernt werden.

29. Verfahren nach Anspruch 26-28, dadurch gekennzeichnet, daß für spezielle Oberflächenanforderungen - wie bessere elektrostatische Haftung, oder zur Verminderung der elektrostatischen Haftung, erhöhte Kratzerresistenz und häufigere Wiederverwendbarkeit -
zusätzliche anorganische Schichten aufgebracht werden.

30. Verfahren nach Anspruch 26-29, dadurch gekennzeichnet, daß für spezielle Oberflächenanforderungen - wie bessere elektrostatische Haftung, oder zur Verminderung der elektrostatischen Haftung, erhöhte Kratzerresistenz und häufigere Wiederverwendbarkeit -
zusätzliche organische Schichten aufgebracht werden.

31. Verfahren nach Anspruch 1, dadurch gekennzeichnet, daß zur Gewinnung des ursprünglichen Kunststoffträgers ohne Haftvermittlungsschichten und ohne Gelatineschichten alkoholische Laugen als Abtragverfahren eingesetzt werden.

32. Verfahren nach Anspruch 1, dadurch gekennzeichnet, daß zur Gewinnung des ursprünglichen Kunststoffträgers ohne Haftvermittlungsschichten und ohne Gelatineschichten Alkohole als Abtragverfahren eingesetzt werden.

33. Verfahren nach Anspruch 1, dadurch gekennzeichnet, daß zur Gewinnung des ursprünglichen Kunststoffträgers ohne Haftvermittlungsschichten und ohne Gelatineschichten organische und/oder aprotische Lösungsmittel als Abtragverfahren eingesetzt werden.

34. Verfahren nach Anspruch 1, dadurch gekennzeichnet, daß zur Gewinnung des ursprünglichen Kunststoffträgers ohne Haftvermittlungsschichten und ohne Gelatineschichten mechanische Methoden als Abtragverfahren eingesetzt werden.

35. Verfahren nach Anspruch 1, dadurch gekennzeichnet, daß zur Gewinnung des ursprünglichen Kunststoffträgers ohne Haftvermittlungsschichten und ohne Gelatineschichten Teilchenstrahler als Abtragverfahren eingesetzt werden.

36. Verfahren nach Anspruch 32-35, dadurch gekennzeichnet, daß für spezielle Oberflächenanforderungen - wie bessere elektrostatische Haftung, oder zur Verminderung der elektrostatischen Haftung, erhöhte Kratzerresistenz und häufigere Wiederverwendbarkeit -
zusätzliche anorganische Schichten aufgebracht werden.

37. Verfahren nach Anspruch 32-36, dadurch gekennzeichnet, daß für spezielle Oberflächenanforderungen - wie bessere elektrostatische Haftung, oder zur Verminderung der elektrostatischen Haftung, erhöhte Kratzerresistenz und häufigere Wiederverwendbarkeit -
zusätzliche organische Schichten aufgebracht werden.

38. Verfahren nach Anspruch 1-37, dadurch gekennzeichnet, daß zur Wiederverwendung für fotografische Verfahren
zusätzliche fotosensible Schichten aufgebracht werden.

39. Verfahren nach Anspruch 26-30, dadurch gekennzeichnet, daß zur Wiederverwendung für fotografische Verfahren
fotosensible Silberhalogenide mit chemischen Nachbehandlungsmethoden in die Gelatineschichten eingelagert werden.

40. Verfahren nach Anspruch 1, dadurch gekennzeichnet, daß zur Rückgewinnung von intakten (nicht zerkleinerten), klarsichtigen und kratzerarmen Planfolien die verbrauchten Folien als Ganzes durch eine Fördereinrichtung (6; Fig. 2) zeitlich gesteuert nacheinander mehreren wäßrigen Bädern (2,3,4) zugeführt und von diesen abgeführt werden, von denen
- ein erstes Bad (2) Denaturierungsmittel, d.h. chemische Substanzen enthält, die Proteine in ihrer räumlichen Struktur verändern,
- ein zweites Bad (3) zellfreie Enzyme enthält, wobei den wäßrigen Bädern Puffersubstanzen (11) zur Einhaltung vorgegebener pH-Werte zugführt werden und ferner mechanische Reinigungsvorrichtungen (4) zum Abtragen angelöster Schichten vorgesehen sind.

41. Verfahren nach Anspruch 40, dadurch gekennzeichnet, daß ein weiteres wäßriges Bad (2) vorgesehen ist, das verdünnte Alkalilauge enthält.

42. Verfahren nach Anspruch 40, dadurch gekennzeichnet, daß den wäßrigen Bädern (2,3,4)) und der Fördereinrichung (6) Wasserdampf mit einer Temperatur von 25-90⁰ C zugeführt wird.

43. Verfahren nach Anspruch 40-42, dadurch gekennzeichnet, daß als Reinigungsvorrichtung Bürsten vorgesehen sind.

44. Verfahren nach Anspruch 40-43, dadurch gekennzeichnet, daß als Reinigungsvorrichtung eine Wasserstrahlvorrichtung vorgesehen ist.

45. Verfahren nach Anspruch 40-44, dadurch gekennzeichnet, daß als Reinigungsvorrichtung Ultraschallgeneratoren vorgesehen sind.

46. Verfahren nach Anspruch 1-31 und 38-45, dadurch gekennzeichnet, daß die Gelatineschichten mit chemischen Verfahren (z.B. Aldehyden, bifunktionellen Agentien, sogen. Cross-Linkern) zusätzlich gehärtet werden.

47. Verfahren nach Anspruch 1-31 und 38-46, dadurch gekennzeichnet, daß die Gelatineschichten mit physikalischen Verfahren (z.B. energiereichem Licht) zusätzlich gehärtet werden.

48. Verfahren nach Anspruch 40, dadurch gekennzeichnet, daß ein weiteres wäßriges Bad (2) vorgesehen ist, das eine Mikrowelleneinrichtung enthält.

49. Verfahren nach Anspruch 40, dadurch gekennzeichnet, daß ein weiteres wäßriges Bad (2) vorgesehen ist, das eine Begasungseinrichtung für Sauerstoff enthält.

50. Verfahren nach Anspruch 40, dadurch gekennzeichnet, daß ein weiteres wäßriges Bad (2) vorgesehen ist, das Sauerstoff *in statu nascendi* enthält.

51. Verfahren nach Anspruch 40, dadurch gekennzeichnet, daß ein weiteres wäßriges Bad (2) vorgesehen ist, das Sauerstoffradikale bildet.

52. Verfahren nach Anspruch 40, dadurch gekennzeichnet, daß ein weiteres wäßriges Bad (2) vorgesehen ist, das eine Gammabestrahlungseinrichtung enthält.

53. Verfahren nach Anspruch 40, dadurch gekennzeichnet, daß ein weiteres wäßriges Bad (2) vorgesehen ist, das verdünnte hypochlorige Säure enthält.

54. Verfahren nach Anspruch 40, dadurch gekennzeichnet, daß ein weiteres wäßriges Bad (2) vorgesehen ist, das verdünntes Wasserstoffperoxid enthält.
